# EUROPEAN PATENT SPECIFICATION

(11) **EP 1 607 466 B1**
(45) Date of publication and mention of the grant of the patent: **12.04.2017**
(21) Application number: 05105291.8
(22) Date of filing: 16.06.2005
(51) Int. Cl.: C10J 3/18, C10J 3/48, C10J 3/26

(54) **DEVICE AND PROCESS FOR WASTE TRANSFORMATION**
VORRICHTUNG UND VERFAHREN ZUR ABFALLBEHANDLUNG
DISPOSITIF ET PROCÉDÉ DE TRAITEMENT DE DÉCHETS

(30) Priority: 17.06.2004 IT RM20040298
(43) Date of publication of application: 21.12.2005
(73) Proprietor: CENTRO SVILUPPO MATERIALI S.p.A., 00129 Roma (IT)
(72) Inventor: D'Angelo, Renato, 00129 Roma (IT); Pinti, Medardo, 00129 Roma (IT); Pistelli, Maria Ilaria, 00129 Roma (IT)
(74) Representative: Capasso, Olga

(56) References cited:
- US-A- 4 056 602
- US-A- 4 823 711
- US-A- 5 010 829
- US-A- 5 809 911
- US-B1- 6 222 153
- US-B1- 6 638 396

## Description

### TECHNICAL FIELD

The present invention relates to a process for continuously transforming waste and to a device, suitable for executing the process, in which chemical-physical thermo-destruction reactions take place in order to obtain products with appropriately controlled composition.

### PRIOR ART

The production of Urban Solid Waste is measured in millions of tons. In Italy, for example, over 26 million tons of Urban Solid Waste were produced with a composition that is very variable with the type of urban zone, the geographic area, the seasons.

A composition provided by way of indication is made up by 29 % of damp organic matter, 28 % of paper and cardboard, 16 % of plastic.

To this enormous mass of materials must be added the materials discarded by industries and special waste of civilian origin, e.g. hospital waste and scrap from motor vehicle demolition. These industrial scraps and special waste have such a weight that they greatly exceed urban solid waste. Also by way of example, in 1998 in Italy 61 million tons of scrapped materials were produced, along with 40 million tons of special waste of civilian origin.

To dispose of such materials, in particular hazardous waste, different hot and cold technologies were used, such as: thermal destruction, chemical detoxification, long-term encapsulation and specific ground filling methods.

However, known methods, comprised in the prior art, have drawbacks such as: use of homogeneous streams of waste with the same physical, solid or liquid or gaseous state; treatment of waste with low concentration of hazardous substances; generation of non inert solid ashes. Moreover, with the exception of high speed incineration, very few of the attempted elimination methods have been marketed so far, because their complete environmental safety could not be ascertained.

Numerous attempts have been made to destroy waste by means of plasma reactors or furnaces, but the typical need to feed them with a single type of waste, the reliability, the productivity of such systems and their high energy consumption are limits present in existing plasma reactors.
The document US 4644877 describes a method and a device for destroying waste by means of pyrolysis, subjecting the waste material to a plasma arc by directly feeding the waste into the plasma arc.

The document US 5280757 instead describes a method for gasifying urban waste by using plasma torches in which the waste is fed directly into the reaction chamber in which the plasma torches act. By so doing, the torches are exposed directly to the chemical aggression of the gases formed during the destruction of the waste and of the oxygen which can be injected or otherwise be present in the chamber where the torches are located.

US 4,056,602 discloses a device where the chamber with a plasma source is separated from the chamber containing the reactants by a thermally insulating wall.

US 4,823,711 discloses a device where a non-reactive sealed wall separates the reaction chamber from heating means disposed within the wall and energized by an external source which can be a plasma.

US 6,638,396 discloses a method and apparatus for processing a waste product and producing a synthesis gas. The system includes a sealed, heated rotatable drum for preheating and preparing the waste material suitable for a plasma reactor, and processing the material in the reactor.

US 5,809,911 discloses a waste treatment system employing multiple reactor zones for processing heterogeneous waste.

US 6,222,153 discloses a method for the incineration of a fluid or fluidizable material by use of a pulsed plasm. The plasma is produced by a confined discharge in a closed chamber having an exit port and containing an ablating material.

US 5,010,829 discloses an Hazardous waste treatment method and. A feedstock of solid or liquid hazardous waste material is combusted in a plasma generator in the absence of oxygen and converted into non-hazardous components which are collected in a reactor chamber. The non-hazardous components are further converted into a gaseous outflow which is cooled and separated into selected constituents which are collected in storage vessels.

In spite of the many efforts made so far, no available technical solution is yet capable to assure high versatility, reliability and high thermal efficiency.

### DISCLOSURE OF INVENTION

A primary object of the present invention is to provide a process for continuously transforming waste and a device, suitable for executing the process, of high simplicity of construction and reliability in terms of type of the physical state of the waste to be transformed, and such as to assure high reaction kinetics, reliability, low energy dispersion, high thermal yield of the torches with high plasma stability.

A further object is to provide a device that has long working life.

Therefore, the present invention proposes to solve the problems discussed above, providing a process and a device for continuously transforming waste which have the characteristics respectively of claims 1 and 6.

Said process for the continuous transformation of waste, whose purpose is to obtain products with appropriately controlled composition, is obtained by means of chemical-physical reactions, performed inside a plasma reactor or furnace, and it comprises the operations of:
- forming a plasma at atmospheric pressure in a first chamber;
- introducing waste to be transformed, simultaneously with any combustion supporter, into a second chamber separated from the first by a thermally conducting dividing element;
- extracting products with controlled composition.

The invention also has as its object a suitable device for achieving the described transformation process. Said device comprises a reactor, with a body having substantially cylindrical symmetry, characterised in that it comprises:
- at least one pair of plasma torches able to operate in a first chamber;
- means for feeding the waste and any combustion supporter into a second chamber;
- at least one element dividing the first chamber from the second chamber;
- a conduit for the evacuation of the gases produced during the process;
- a conduit for discharging both liquid and solid slag;
- a crucible for collecting slag;
- a system for pre-heating the combustion supporter.

The torches, preferably with transferred arc, powered with direct current, operate in a first chamber, separated by means of at least one dividing element, able to assure a high thermal conductivity, from a second chamber into which the waste is inserted, in such a way that the torches are not directly exposed to the chemical aggression of the gases formed during the destruction of the waste, e.g. acid fraction, and of the oxygen and/or air which may be injected or otherwise be present.

The waste inserted into the reactor arrive in a high temperature environment with the possibility of forming free carbon in conditions of absence of oxygen in the atmosphere of the reactor. The ratio between the combustion supporter and the inserted material can also be such that no free carbon remains, a sub-stoichiometric ratio being maintainable between injected material and combustion supporter, such a to create a reducing environment that leads to the formation of gases, such as carbon oxide and hydrogen, and which reduces the formation of NOₓ in process fumes.

The element dividing the first chamber from the second chamber is thermally conducting and it is made of a material preferably selected from the group comprising: SiC, Molybdenum.

The means for feeding the waste from above are advantageously selected from the group comprising: gravity systems, injection lance. Means for laterally feeding the waste can also be provided.

The means for laterally feeding the waste to be transformed and the combustion supporter are constituted by a multiplicity of nozzles oriented towards the centre of the transformation device, arranged circumferentially in the lower area of the reactor, horizontal or inclined downwards.

The means for feeding the combustion supporter from below are constituted by a multiplicity of nozzles, circumferentially arranged preferably in the lower area of the reactor. Said nozzles are inclined by an angle between zero and 40° with respect to the horizontal.

The inner walls of the reactor, in the region between first chamber and second chamber, can be inclined relative to the vertical by an angle between 20° and 50° in order to promote the escape of the waste.

The introduction of materials to be transformed together with the combustion supporter takes place by means of a plurality of insertion points, which are on different levels, through nozzles or other devices to increase the reaction surface.

The dependent claims describe some other preferred embodiments of the invention.

### BRIEF DESCRIPTION OF THE FIGURES

Further characteristics and advantages of the invention shall become more readily apparent in light of the detailed description of preferred, but not exclusive, embodiments of a plasma reactor illustrated, provided purely by way of non limiting example, with the aid of the accompanying drawing tables in which:
Fig. 1 shows a schematic view in longitudinal section at the centre of the furnace of a reactor according to a first operating mode for solid waste;
Fig. 2 shows a schematic view in longitudinal section of a reactor according to a second operating mode for liquid waste.

### DETAILED DESCRIPTION OF ILLUSTRATIVE EMBODIMENTS

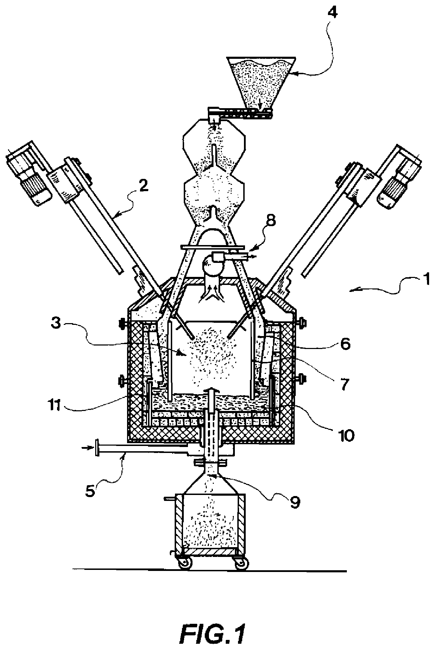

With reference to Fig. 1, a reactor is shown, which comprises:
- a body 1;
- a pair of plasma torches 2, whereof one is anodic and the other one cathodic;
- a first chamber 3 in which the torches 2 are positioned and plasma is formed;
- a second chamber 6 into which the waste is inserted;
- a thermally conducting element 7 for dividing the two chambers 2, 3;
- means 4 for feeding the waste;
- means 5 for feeding the combustion supporter;
- a conduit 8 for evacuating the gases, partially illustrated, to convey outwards the gases produced in the reactor during the process;
- a conduit 9 for discharging slag;
- a crucible 10 for collecting slag;
- a system 11 for pre-heating the combustion supporter.

The reactor, which may be water cooled, has the inner walls lined with refractory material, such as alumina.

The lower part of the reactor, constituted by the bottom and by the lower walls, which may be inclined by an angle between 30 and 40° with respect to the vertical, is made of silica carbide, or other material, suitable to prevent the formation of compounds of any kind due to contact with the slag.

The conduit 9 for discharging liquid slag is preferably made of magnesian refractory. The following table summarises the main characteristics of an example of reactor.

| | |
|---|---|
| Diameter of the bottom | 600 mm |
| Inner diameter furnace centre | 680 mm |
| Outer height | 1300 mm |
| Inner height | 600 mm |
| Useful volume | 50 l |
| Refractory lining | Alumina, SiC |
| Water cooling | Crown, upper part of the walls |
| Evacuation or discharge hole | Central |
| Operating pressure | Atmospheric |

The torches 2, one cathodic and one anodic, enter the reactor from the crown and arrive in operating position at a distance from the bottom of 300-400 mm. The table that follows shows the operating parameters used for the operation of the torches 2.

| | |
|---|---|
| Number of torches | 2 |
| Mean nominal power | 130 kW |
| Mean length of the arc | 120 mm |
| Argon for cathodic torch | 30 l/min |
| Argon for anodic torch | 40 l/min |
| Torch length | 1100 mm |
| Torch actuation | on three axes |

Advantageously, the reactor is also provided with an automation and control system with the related sensors to regulate the position of the torches 2, the feeding rate of the waste and the electrical power supply to the torches.

A unit for filtering and recovering the heat of the gas coming from the evacuation conduit 8, not illustrated in the figures, is also provided.

With the aid of the figures, two embodiments of the invention shall now be provided, to facilitate a better understanding of purposes, characteristics, advantages and operating procedures.

The first example, illustrated in Fig. 1, refers to a device for the transformation of solid waste.

With reference to this Figure, on the crown of the plasma reactor is present a circular conduit for the passage of solid waste, connected with the means 4 for transporting and metering the solid waste.

The treatment of the material inserted into the upper part of the reactor takes place during its descent into the chamber 6.

The treatment can also be obtained by injecting combustion supporter into or just above the free surface of the slag, where the residual carbon material and the ashes produced are collected. This combustion supporting gas, used for gasification, is advantageously pre-heated before it is inserted into the reactor. This operation is performed to recover energy by making the gas flow through the pre-heating system 11 obtained inside the refractory bottom below the crucible 10.

By providing an appropriate number of insertion points, on different levels, the efficiency of the contact between the hot combustion supporter and carbon and/or the still unburned waste parts is increased, thereby raising the reaction yield and kinetics.

The continuous transformation, with a gasification process with or without the addition of combustion supporter (O₂), of 60 kg/h of fuel derived from waste, has led to the formation of about 120-150 m³(STP)/h of gas according to the quantity of auxiliary combustion supporter added, having for the main constituents the composition shown in the table that follows

| Component | % Volume |
|---|---|
| CO | 23-30 |
| CO₂ | 2-10 |
| H₂ | 20-25 |
| H₂O | 2-10 |

The concentration of pollutants in the gas at the chimney was found to be within the limits set out by the law.

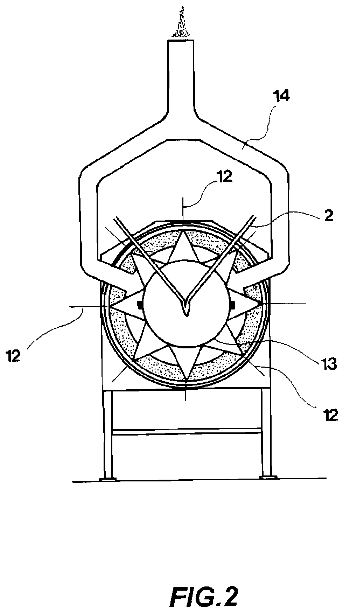

The second example, illustrated in Fig. 2, refers to a device for the transformation of liquid waste.

With reference to said figure, at least one level of injectors is present for the insertion of waste and, possibly, of combustion supporter simultaneously. The injection takes place through a multiplicity of nozzles 12 arranged circumferentially on a multiplicity of circumferences, with radial direction of injection, in order to involve the entire outer surface of the dividing element 13. The conduit 14 is used to evacuate the gases produced in the process.

Considering the goals of high efficiency of the chemical reactions and of reactor flexibility and productivity, high kinetics are required.

Thermodestruction with a pyrolysis process of 100 kg/h of high Chlorine (47 %) PCB (polychlorobiphenyls) led to the formation of about 56 m³ (STP)/h of gas having the composition shown in the following table.

| Component | % Volume |
|---|---|
| CO | 2-5 |
| CO₂ | 0-1 |
| H₂ | 10-20 |
| H₂O | 0-1 |
| Total hydrocarbons (TOC) | < 0.06 |
| HCl | 50-60 |
| N₂ | 1-2 |
| Argon | 20-30 |
| NOₓ | <200 ppm |

As shown in the table, the gases formed were mainly hydrogen and hydrochloric acid. With regard to dioxin, the values are 0.1 ng/m³(STP) already at the output of the reactor, hence in a lower concentration than the law mandated limits at the chimney. With regard to the other organic pollutants, a treatment of the fumes allowed to bring them under law-mandated limits at the chimney, as was the case for inorganic ones (HCl, SO₂, CO, etc).

The degree of destruction derived from these data was 99.999 %, whilst maximum expended specific energy was 2.5 kWh/kg. Moreover, about 40 kg of solid carbon were formed, as estimated by means of isokinetic samplings of the fumes.
In both cases, for solid and liquid waste, the complete environmental safety of the process and of the device of the device was ascertained; the process and device also assure versatility, reliability, good reliability and less energy consumption than the numerous attempts to destroy waste by means of plasma reactors.

Therefore, the invention solves the problems set out in the disclosure while also assuring a high efficiency of the torches with high plasma stability.

To the process and device described above, a person versed in the art, in view of contingent requirements, may make modifications and variants without thereby departing from the scope of protection as defined in the appended claims.

## Claims

1. A process for continuously transforming waste to obtain products with appropriately controlled composition, **characterised in that** it comprises the operations of:
forming a plasma at atmospheric pressure in a first chamber (3),
introducing waste to be transformed, simultaneously with any combustion supporter, into a second chamber (6) separated from the first chamber (3) by at least one thermally conductive dividing element (7), wherein the introduction of waste to be transformed together with the combustion supporter takes place by means of a plurality of insertion points, which are on different levels, through nozzle or other means, and
extracting products with controlled composition.

2. Process for continuously transforming waste as claimed in claim 1 wherein the thermally conductive element (7) is selected from the group comprising SiC and Mo.

3. Process as claimed in claim 1 wherein the introduction of waste to be transformed takes place vertically from the top.

4. Process as claimed in claim 1, wherein the introduction of waste to be transformed takes place laterally, possibly in radial direction.

5. Process as claimed in claim 1, wherein the introduction of combustion supporter takes place from below, possibly simultaneously, laterally in the radial direction.

6. A device for executing the process for continuously transforming waste to obtain products with appropriately controlled composition as claimed in claims 1 through 5, comprising a body (1) that is **characterised in that** it comprises:
at least one pair of plasma torches (2) able to operate in a first chamber (3);
means (4) for feeding the waste simultaneously with any combustion supporter into a second chamber (6), wherein the introduction of waste to be transformed together with the combustion supporter takes place by means of a plurality of insertion points, which are on different levels, through nozzle or other means;
at least one thermally conductive element (7) dividing the first chamber (3) from the second chamber (6);
a conduit (8) for evacuating the gases;
a conduit (9) for discharging slag;
a crucible (10) for collecting slag.

7. Device as claimed in claim 6 wherein means are provided for feeding combustion supporter into the second chamber (6).

8. Device as claimed in claim 6 wherein a system (11) for preheating the combustion supporter is provided.

9. Device as claimed in claim 6, wherein said dividing element (7) is made of a material preferably selected from the group comprising: SiC, Mo.

10. Device as claimed in claims 6 through 9 wherein said means (4) for feeding the waste from above are preferably selected from the group comprising:
gravity systems, injection lance.

11. Device as claimed in claims 6 through 9 wherein the means for laterally feeding the waste to be transformed and the combustion supporter are constituted by a multiplicity of nozzles oriented towards the centre, positioned circumferentially, horizontal or inclined downwards.

12. Device as claimed in claims 6 through 9, wherein said means (5) for feeding the combustion supporter from below are constituted by a multiplicity of nozzles, circumferentially arranged in the lower area of the reactor.

13. Device as claimed in claim 12, wherein said nozzles are inclined by an angle between zero and 40 DEG with respect to the horizontal plane.

14. Device as claimed in any of the previous claims from 6 through 13, wherein said device comprises a unit for filtering and recovering the heat of the gases coming from the evacuation conduit (8).

## Patentansprüche

1. Verfahren zum fortlaufenden Behandeln von Abfall, um Produkte mit einer angemessen kontrollierten Zusammensetzung zu erhalten, **dadurch gekennzeichnet, dass** es die Arbeitsschritte umfasst:
Bilden eines Plasmas bei Luftdruck in einer ersten Kammer (3),
Zuführen von Abfall, der zu behandeln ist, zeitgleich mit einem Verbrennungsunterstützer in eine zweite Kammer (6), die von der ersten Kammer (3) durch mindestens ein wärmeleitendes Trennelement (7) abgetrennt ist, wobei die Zufuhr von Abfall, der zu behandeln ist, gemeinsam mit dem Verbrennungsunterstützer über viele Zufuhrpunkte, die auf verschiedenen Höhen sind, durch Düsen oder andere Mittel stattfindet, und
Ausgeben von Produkten mit kontrollierter Zusammensetzung.

2. Verfahren zum Behandeln von Abfall nach Anspruch 1, wobei das wärmeleitende Element (7) aus der Gruppe ausgewählt ist, umfassend SiC und Mo.

3. Verfahren nach Anspruch 1, wobei die Zufuhr von Abfall, der zu behandeln ist, vertikal von der Oberseite stattfindet.

4. Verfahren nach Anspruch 1, wobei die Zufuhr von Abfall, der zu behandeln ist, seitlich stattfindet, gegebenenfalls in radialer Richtung.

5. Verfahren nach Anspruch 1, wobei die Zufuhr von Verbrennungsunterstützer von unten, gegebenenfalls zeitgleich, seitlich in radialer Richtung stattfindet.

6. Vorrichtung zum Ausführen des Verfahrens zum fortlaufenden Behandeln von Abfall, um Produkte mit angemessen kontrollierter Zusammensetzung nach Anspruch 1 bis 5 zu erhalten, umfassend ein Gehäuse (1) das **dadurch gekennzeichnet ist, dass** es umfasst:
mindestens ein Paar von Plasmabrennern (2), die fähig sind, in einer ersten Kammer (3) zu arbeiten;
Mittel (4) zum Einspeisen des Abfalls, zeitgleich mit einem Verbrennungsunterstützer, in eine zweite Kammer (6), wobei die Zufuhr von Abfall, der zu behandeln ist, gemeinsam mit dem Verbrennungsunterstützer über viele Zufuhrpunkte, die auf verschiedenen Höhen sind, durch Düsen oder andere Mittel stattfindet;
mindestens ein wärmeleitendes Element (7), das die erste Kammer (3) von der zweiten Kammer (6) trennt;
eine Leitung (8) zum Auslassen des Gases;
eine Leitung (9) zum Entladen von Schlacke;
ein Tiegel (10) zum Sammeln von Schlacke.

7. Vorrichtung nach Anspruch 6, wobei Mittel zum Einspeisen des Verbrennungsunterstützers in die zweite Kammer (6) bereitgestellt sind.

8. Vorrichtung nach Anspruch 6, wobei ein System (11) zum Vorwärmen des Verbrennungsunterstützers bereitgestellt ist.

9. Vorrichtung nach Anspruch 6, wobei das Trennelement (7) aus einem Material gemacht ist, bevorzugt ausgewählt aus der Gruppe umfassend: SiC, Mo.

10. Vorrichtung nach den Ansprüchen 6 bis 9, wobei die Mittel (4) zum Einspeisen des Abfalls von oben bevorzugt aus der Gruppe ausgewählt sind, umfassend:
Gravitationssysteme, Injektionslanze.

11. Vorrichtung nach den Ansprüchen 6 bis 9, wobei die Mittel zum seitlichen Einspeisen des Abfalls, der zu behandeln ist, und des Verbrennungsunterstützers aus einer Vielzahl von Düsen bestehen, die zum Mittelpunkt hin ausgerichtet sind, umlaufend, horizontal oder nach unten geneigt positioniert sind.

12. Vorrichtung nach Ansprüchen 6 bis 9, wobei die Mittel (5) zum Einspeisen des Verbrennungsunterstützers aus einer Vielzahl von Düsen bestehen, die umlaufend im unteren Bereich des Reaktors angeordnet sind.

13. Vorrichtung nach Anspruch 12, wobei die Düsen um einen Winkel zwischen null und 40 Grad mit Bezug zu der horizontalen Ebene geneigt sind.

14. Vorrichtung nach einem der vorangehenden Ansprüche von 6 bis 13, wobei die Vorrichtung eine Einheit zum Filtern und Rückgewinnen der Wärme der Gase, die aus der Auslassleitung (8) kommen, umfasst.

## Revendications

1. Processus de transformation continue des déchets pour obtenir des produits de composition contrôlée de manière appropriée, **caractérisé en ce qu'**il comprend les opérations de :
former un plasma à pression atmosphérique dans une première chambre (3),
introduire les déchets à transformer, simultanément avec un quelconque auxiliaire de combustion, à l'intérieur d'une seconde chambre (6) séparée de la première chambre (3) par au moins un élément de division thermoconducteur (7), dans lequel l'introduction des déchets à transformer ensemble avec l'auxiliaire de combustion se déroule au moyen d'une pluralité de points d'insertion, qui sont sur des niveaux différents, à travers des buses ou d'autres moyens, et
extraire les produits de composition contrôlée.

2. Processus de transformation continue des déchets selon la revendication 1, dans lequel l'élément thermoconducteur (7) est choisi parmi le groupe comprenant SiC et Mo.

3. Processus selon la revendication 1, dans lequel l'introduction des déchets à transformer se déroule de manière verticale depuis le haut.

4. Processus selon la revendication 1, dans lequel l'introduction des déchets à transformer se déroule de manière latérale, possiblement dans une direction radiale.

5. Processus selon la revendication 1, dans lequel l'introduction de l'auxiliaire combustion se déroule à partir du bas, possiblement de manière simultanée, latéralement dans la direction radiale.

6. Dispositif destiné à l'exécution du processus de transformation continue des déchets pour obtenir des produits avec une composition contrôlée de manière appropriée selon les revendications 1 à 5, comprenant un corps (1) qui est **caractérisé en ce qu'**il comprend
au moins une paire de torches plasma (2) capables de fonctionner dans une première chambre (3) ;
des moyens (4) pour alimenter les déchets simultanément avec un quelconque auxiliaire de combustion dans une seconde chambre (6), dans lequel l'introduction des déchets à transformer ensemble avec l'auxiliaire de combustion s'effectue au moyen d'une pluralité de points d'insertion, lesquels se trouvent à différents niveaux, à travers des buses ou d'autres moyens ;
au moins un élément thermoconducteur (7) divisant la première chambre (3) de la seconde chambre (6) ;
une conduite (8) destinée à l'évacuation des gaz ;
une conduite (9) destinée à la décharge de scories ;
un creuset (10) destiné à la récolte des scories.

7. Dispositif selon la revendication 6, dans lequel les moyens sont fournis pour alimenter l'auxiliaire de combustion à l'intérieur de la seconde chambre (6).

8. Dispositif selon la revendication 6, dans lequel un système (11) destiné à la préchauffe de l'auxiliaire de combustion est fourni.

9. Dispositif selon la revendication 6, dans lequel ledit élément de division (7) est fabriqué à partir d'un matériau de préférence choisi parmi le groupe comprenant : SiC, Mo.

10. Dispositif selon l'une quelconque des revendications 6 à 9, dans lequel lesdits moyens (4) destinés à l'alimentation des déchets à partir du haut sont de préférence choisis parmi le groupe comprenant :
des systèmes à gravité, une canne d'injection.

11. Dispositif selon l'une quelconque des revendications 6 à 9, dans lequel les moyens destinés à l'alimentation de manière latérale des déchets à transformer et l'auxiliaire de combustion sont constitués d'une multiplicité de buses orientées vers le centre, positionnées de manière circonférentielle, horizontales ou inclinées vers le bas.

12. Dispositif selon l'une quelconque des revendications 6 à 9, dans lequel lesdits moyens (5) destinés à l'alimentation de l'auxiliaire de combustion à partir du bas sont constitués d'une multiplicité de buses, agencées de manière circonférentielle dans la zone inférieure du réacteur.

13. Dispositif selon la revendication 12, dans lequel lesdites buses sont inclinées d'un angle compris entre 0 et 40 DEG par rapport au plan horizontal.

14. Dispositif selon l'une quelconque des revendications 6 à 13, dans lequel ledit dispositif comprend une unité destinée à la filtration et à la récupération de la chaleur des gaz provenants de la conduite d'évacuation (8).
